# FASCICULE DE BREVET EUROPEEN

(11) **EP 1 806 079 B1**
(45) Date de publication et mention de la délivrance du brevet: **22.10.2008**
(21) Numéro de dépôt: 06356151.8
(22) Date de dépôt: 22.12.2006
(51) Int. Cl.: A47J 43/07, A47J 43/08

(54) **Appareil de préparation culinaire muni d'un accouplement sécuritaire entre un arbre d'entraînement et un outil rotatif**
Gerät zur Zubereitung von Speisen, das mit einer Sicherungskupplung zwischen einer Antriebswelle und einem sich drehenden Instrument ausgestattet ist
Cooking appliance equipped with a safety coupling between a drive shaft and a rotating tool

(30) Priorité: 10.01.2006 FR 0600187
(43) Date de publication de la demande: 11.07.2007
(73) Titulaire: SEB S.A., 69130 Ecully (FR)
(72) Inventeur: Lecerf, Joël, 50190 Periers (FR)
(74) Mandataire: Kiehl, Hubert

(56) Documents cités:
- FR-A1- 2 756 477

## Description

La présente invention se rapporte au domaine technique général des appareils électroménagers de préparation culinaire et plus particulièrement à un appareil comportant un récipient de travail dont le fond est muni d'un axe de guidage sur lequel est susceptible de s'engager un outil rotatif destiné au traitement des aliments, le récipient de travail étant fermé par un couvercle supportant un arbre d'entraînement muni d'un entraîneur destiné à s'accoupler avec l'outil rotatif.

Il est connu, de la demande de brevet EP 529 287, un accessoire de préparation culinaire comportant un récipient de travail fermé par un couvercle présentant un arbre d'entraînement dont l'extrémité inférieure est muni d'un entraîneur destiné à s'accoupler avec un outil rotatif disposé dans le fond du récipient. Dans ce document, l'arbre d'entraînement présente une empreinte en forme de croix dans laquelle vient s'engager l'extrémité supérieure du moyeu de l'outil, cette dernière présentant une section en croix, l'accouplement ainsi réalisé permettant la transmission d'un couple moteur entre l'entraîneur et l'outil rotatif. Cependant, un tel accouplement présente l'inconvénient d'assurer un engagement stable du moyeu de l'outil sur l'entraîneur lorsque l'utilisateur tient le couvercle à l'envers, sans le récipient, et accouple l'outil rotatif sur l'entraîneur du couvercle. Il s'ensuit un risque important de blessure pour l'utilisateur si le moteur est alors mis en route.

L'invention qui suit vise à pallier ces inconvénients en proposant un appareil de préparation culinaire comportant un récipient de travail fermé par un couvercle supportant un arbre d'entraînement muni d'un entraîneur destiné à s'accoupler avec un outil rotatif dans lequel l'accouplement entre ces derniers est tel qu'il rend impossible la transmission sous effort d'un couple entre l'entraîneur et l'outil lorsque le récipient n'est pas présent.

Le but de l'invention est atteint par un appareil de préparation culinaire comportant un récipient de travail dont le fond est muni d'un axe de guidage sur lequel est susceptible de s'engager un outil rotatif destiné au traitement des aliments, le récipient de travail étant fermé par un couvercle supportant un arbre d'entraînement muni d'un entraîneur destiné à s'accoupler avec l'outil rotatif, caractérisé en ce que l'accouplement de l'entraîneur sur l'outil rotatif est réalisé au moyen de formes conjuguées assurant la seule transmission d'un couple à l'outil rotatif, sans assurer un maintien radial de l'outil rotatif par rapport à l'entraîneur.

Une telle caractéristique présente l'avantage d'assurer une plus grande sécurité à l'appareil en empêchant un accouplement stable entre l'outil et l'arbre d'entraînement lorsque l'utilisateur tient le couvercle à l'envers, sans le récipient, et pose en équilibre l'outil sur l'arbre d'entraînement avant d'actionner le moteur.

Selon une autre caractéristique de l'invention, l'outil rotatif comporte un moyeu qui est traversé par l'axe de guidage, l'extrémité supérieure de l'axe de guidage venant s'engager dans l'entraîneur pour guider radialement ce dernier.

Selon une autre caractéristique de l'invention, l'entraîneur présente une partie inférieure comportant une cavité convergente munie d'un orifice central dans lequel s'engage l'extrémité de l'axe de guidage.

Selon une autre caractéristique de l'invention, le moyeu présente un bord supérieur venant bord à bord avec un bord inférieur de l'entraîneur.

Selon une autre caractéristique de l'invention, les bords du moyeu et de l'entraîneur venant en vis-à-vis présentent deux marches disposées symétriquement l'une par rapport à l'autre, ces marches comportant un bord latéral s'étendant sensiblement axialement et un bord supérieur s'étendant hélicoïdalement pour rejoindre la base du bord latéral de l'autre marche.

Selon une autre caractéristique de l'invention, l'arbre d'entraînement comporte une extrémité supérieure entraînée en rotation par un moteur.

Selon encore une autre caractéristique de l'invention, l'extrémité supérieure de l'arbre d'entraînement est destinée à s'accoupler avec un boîtier moteur amovible.

On comprendra mieux les buts, aspects et avantages de la présente invention, d'après la description donnée ci-après d'un mode particulier de réalisation de l'invention, présenté à titre d'exemple non limitatif, en se référant aux dessins annexés dans lesquels :
- la figure 1 est une vue en perspective éclatée d'un accessoire de préparation culinaire selon un mode particulier de réalisation de l'invention ;
- la figure 2 est une autre vue en perspective éclatée de l'accessoire de préparation culinaire de la figure 1 ;
- la figure 3 est une vue en coupe longitudinale éclatée de l'accessoire de préparation culinaire des figures 1 et 2 ;
- la figure 4 est une vue en coupe longitudinale de l'accessoire culinaire des figures 1 et 2 lorsque tous les éléments sont assemblés les uns aux autres.

Seuls les éléments nécessaires à la compréhension de l'invention ont été représentés. Pour faciliter la lecture des dessins les mêmes éléments portent les mêmes références d'une figure à l'autre.

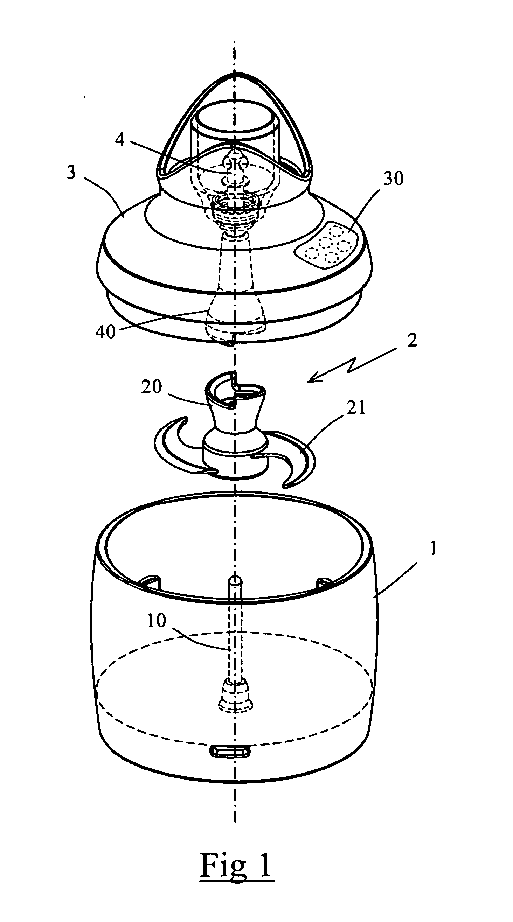

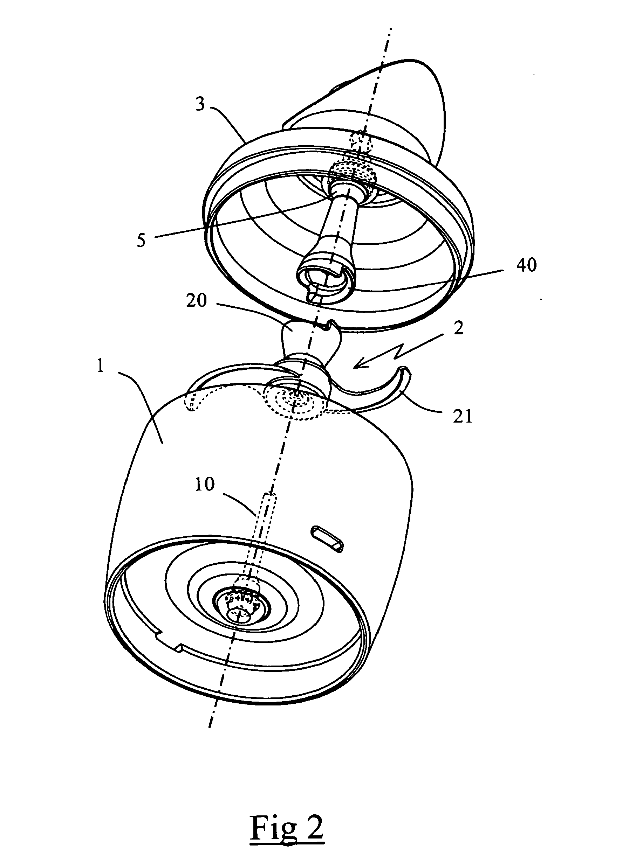

Les figures 1 et 2 représentent un accessoire mini-hachoir destiné à être accouplé avec un boîtier moteur de pied mixeur, non représenté sur les figures. Un tel boîtier moteur de pied mixeur est par exemple décrit dans la demande de brevet FR-A1-2 871 356 déposée par la demanderesse.

Conformément à ces figures, cet accessoire mini-hachoir comporte un récipient de travail 1 au fond duquel s'étend verticalement un axe de guidage 10 central sur lequel un outil de travail 2 est monté en rotation. L'outil de travail 2 comporte un moyeu 20 supportant des couteaux 21 et présente un alésage central 22 dans lequel s'insère l'axe de guidage 10.

Le récipient 1 est fermé par un couvercle 3 qui supporte en son centre un arbre d'entraînement 4, représenté en pointillé sur la figure 1, dont l'extrémité supérieure est susceptible d'être entraînée en rotation par le boîtier moteur et dont l'extrémité inférieure comporte un entraîneur 40 venant coopérer avec l'extrémité supérieure du moyeu 20 de l'outil rotatif pour entraîner ce dernier en rotation. De manière avantageuse, le couvercle 3 présente une zone 30 munie d'orifices de soupoudrage, représentés en pointillé sur la figure 1, fermée par un volet.

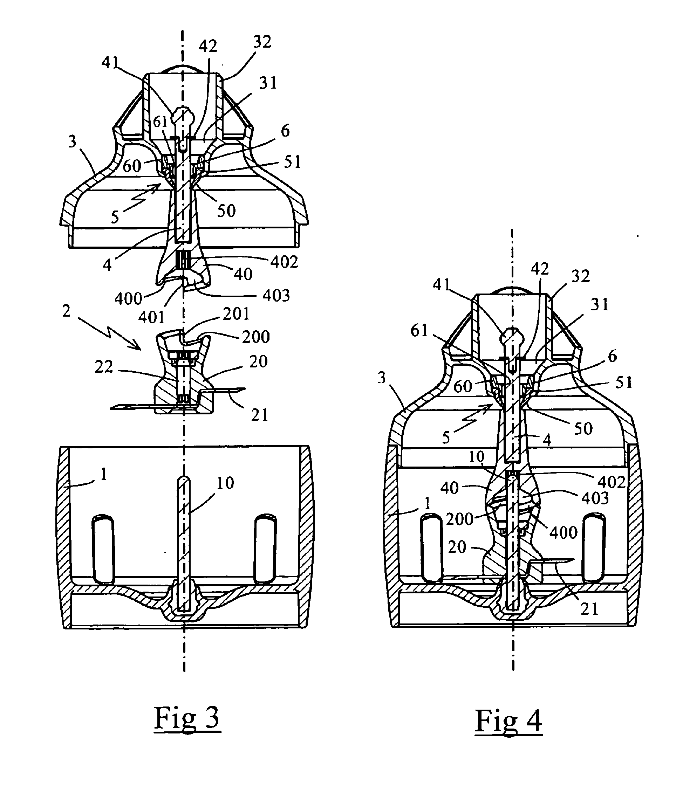

Conformément aux figures 3 et 4, l'arbre d'entraînement 4 traverse le couvercle 3 via une ouverture disposée au fond d'une cavité centrale 31 sensiblement conique disposée dans le prolongement d'un manchon 32 de plus grand diamètre adapté pour se connecter au boîtier moteur, l'extrémité supérieure de l'arbre d'entraînement 4 débouchant dans ledit manchon 32 et présentant deux oreilles 41 prévues pour s'engager dans un entraîneur du boîtier moteur.

De manière préférentielle, l'ouverture par laquelle l'arbre d'entraînement 4 traverse le couvercle 3 reçoit un joint d'étanchéité 5 comportant avantageusement une lèvre souple 50 sensiblement conique dont l'extrémité convergente vient au contact de l'arbre d'entraînement 4 et l'extrémité divergente est munie d'une collerette radiale 51 qui vient en appui contre les bords de l'ouverture. Ce joint d'étanchéité 5 est avantageusement réalisé en matériau élastomère et est immobilisé par une bague de maintien 6 qui vient s'encliqueter dans la cavité centrale 31, la bague 6 présentant un bossage périphérique 60 s'engageant dans une rainure de la cavité centrale 31.

La bague de maintien 6 comporte une ouverture 61 pour le passage de l'arbre d'entraînement 4 présentant un diamètre supérieur au diamètre extérieur de l'arbre d'entraînement 4 de sorte que ce dernier peut se déplacer radialement et s'aligner automatiquement avec l'axe de guidage 10 lorsque le couvercle 3 est mis en place sur le récipient 1. De préférence, le diamètre de l'ouverture 61 est tel que le débattement radial de l'arbre d'entraînement 4 est supérieur à 1 mm. Un tel déplacement radial de l'arbre d'entraînement 4 permet de corriger un défaut de coaxialité entre l'arbre d'entraînement 4 et l'axe de guidage 10, généré notamment par les dispersions de fabrication, et s'accompagne d'une légère déformation de la lèvre 50 du joint d'étanchéité 5, sans toutefois nuire à l'étanchéité.

L'arbre d'entraînement 4 est avantageusement constitué par deux parties assemblées l'une sur l'autre, l'arbre comportant une rondelle 42 à la jonction des deux parties empêchant le retrait de l'axe au travers de l'orifice 61 de la bague de maintien 6.

De manière préférentielle, l'entraîneur 40 comporte une partie supérieure fuselée, enveloppant l'arbre d'entraînement 4, dont l'extrémité supérieure parvient en bordure du joint d'étanchéité 5 lorsque le couvercle 3 est fermé.

L'entraîneur 40 présente une partie inférieure évasée creuse venant coopérer avec la partie supérieure du moyeu 20 de l'outil de travail pour entraîner ce dernier en rotation lorsque le couvercle 3 est fermé sur le récipient.

A cet effet, la partie évasée de l'entraîneur 40 présente un bord 400 dont la forme échancrée coopère avec le bord supérieur 200 de forme complémentaire porté par l'extrémité supérieure évasée du moyeu 20.

Plus particulièrement selon l'invention, la forme échancrée du bord 400 de l'entraîneur 40 est adaptée pour transmettre uniquement un couple moteur à l'outil rotatif 2 sans maintenir radialement l'entraîneur 40 par rapport au moyeu 20 de l'outil 2.

A titre d'exemple, les formes des bords 200,400 du moyeu de l'outil rotatif et de l'entraîneur venant en vis-à-vis présentent deux marches 201, 401 disposées symétriquement l'une par rapport à l'autre, ces marches 201, 401 comportant un bord latéral s'étendant sensiblement axialement et un bord supérieur s'étendant hélicoïdalement pour rejoindre la base du bord latéral de l'autre marche.

Comme on peut mieux le voir sur la figure 4, le guidage radial de l'entraîneur 40 par rapport au moyeu 20 de l'outil rotatif est assuré par l'extrémité de l'axe de guidage 10 porté par le récipient 1. A cet effet, l'axe de guidage 10 traverse l'alésage 22 de l'outil de travail 2, lorsque ce dernier est mis en place dans le récipient 1, et vient s'engager sur quelques millimètres dans un orifice 402 disposé au centre d'une cavité convergente 403 définie par la partie creuse de l'entraîneur 40.

L'engagement de l'entraîneur 40 sur l'extrémité de l'axe de guidage 10 lors de la fermeture du récipient 1 au moyen du couvercle 3 est ainsi facilité par la présence, à l'extrémité évasée de l'entraîneur 40, de la cavité 403 convergeant vers l'orifice 402 et par le fait que l'arbre d'entraînement 4 est maintenu sensiblement dans la direction axiale du couvercle 3 par le joint d'étanchéité 5.

Un dispositif d'accouplement muni de telles formes conjuguées de l'entraîneur et du moyeu de l'outil présente l'avantage d'assurer une grande sécurité d'utilisation de l'accessoire en empêchant l'engagement stable de l'outil rotatif sur l'entraîneur si l'utilisateur essaye de positionner l'outil rotatif sur l'entraîneur sans utiliser le récipient, mais en tenant le couvercle tête en bas accouplé au boîtier moteur. En effet, si l'utilisateur effectue une telle opération en essayant de poser l'outil rotatif en équilibre sur l'entraîneur, le moindre couple résistant appliqué sur les couteaux 21 engendrera un effort radial qui désengagera l'outil rotatif de l'entraîneur. Les risques de coupure profonde pour l'utilisateur par la mise en marche du boîtier moteur en l'absence de récipient sont donc considérablement réduits.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention, telle que revendiquée.

Ainsi, les formes conjuguées assurant l'entraînement de l'outil rotatif par l'entraîneur pourront être constituées par toute autre forme assurant la transmission du couple sans assurer le maintien radial de l'outil rotatif par rapport à l'entraîneur.

Ainsi, dans une variante de réalisation non représentée, le guidage radial de l'entraîneur pourra être assuré par un palier porté par le couvercle au lieu d'être assurer par l'extrémité d'un axe de guidage traversant le moyeu.

## Revendications

1. Appareil électroménager de préparation culinaire comportant un récipient de travail (1) dont le fond est muni d'un axe de guidage (10) sur lequel est susceptible de s'engager un outil rotatif (2) destiné au traitement des aliments, ledit récipient de travail (1) étant fermé par un couvercle (3) supportant un arbre d'entraînement (4) muni d'un entraîneur (40) destiné à s'accoupler avec ledit outil rotatif, **caractérisé en ce que** l'accouplement de l'entraîneur (40) sur l'outil rotatif (2) est réalisé au moyen de formes conjuguées assurant la seule transmission d'un couple à l'outil rotatif (2), sans assurer un maintien radial de l'outil rotatif (2) par rapport à l'entraîneur (40).

2. Appareil de préparation culinaire selon la revendication 1, **caractérisé en ce que** l'outil rotatif (2) comporte un moyeu (20) qui est traversé par l'axe de guidage (10), l'extrémité supérieure de l'axe de guidage (10) venant s'engager dans l'entraîneur (40) pour guider radialement ce dernier.

3. Appareil de préparation culinaire selon la revendication 2, **caractérisé en ce que** ledit entraîneur (40) présente une partie inférieure comportant une cavité convergente (403) munie d'un orifice central (402) dans lequel s'engage l'extrémité de l'axe de guidage (10).

4. Appareil de préparation culinaire selon l'une quelconque des revendications 2 à 3, **caractérisé en ce que** le moyeu (20) présente un bord supérieur (200) venant bord à bord avec un bord inférieur (400) de l'entraîneur (40).

5. Appareil de préparation culinaire selon la revendication 4, **caractérisé en ce que** les bords (200, 400) du moyeu (20) et de l'entraîneur (40) venant en vis-à-vis présentent deux marches (201, 401) disposées symétriquement l'une par rapport à l'autre, ces marches (201, 401) comportant un bord latéral s'étendant sensiblement axialement et un bord supérieur s'étendant hélicoïdalement pour rejoindre la base du bord latéral de l'autre marche.

6. Appareil de préparation culinaire selon l'une quelconque des revendications 1 à 5, **caractérisé en ce que** ledit arbre d'entraînement (4) comporte une extrémité supérieure entraînée en rotation par un moteur.

7. Appareil de préparation culinaire selon la revendication 6, **caractérisé en ce que** l'extrémité supérieure de l'arbre d'entraînement (4) est destinée à s'accoupler avec un boîtier moteur amovible.

## Claims

1. A household electrical appliance for preparing food, which appliance includes a work receptacle (1) having a bottom provided with a guide spindle (10) suitable for receiving a rotary tool (2) that is engaged thereon and that is designed for processing food, said work receptacle (1) being closed by a lid (3) supporting a drive shaft (4) provided with a driver (40) designed to be coupled to said rotary tool, said appliance being **characterized in that** the driver (40) is coupled to the rotary tool (2) by means of complementary shapes that serve solely to transmit torque to the rotary tool (2), without constraining the rotary tool (2) radially relative to the driver (40).

2. An appliance for preparing food according to claim 1, **characterized in that** the rotary tool (2) has a hub (20) through which the guide spindle (10) passes, the top end of the guide spindle (10) coming to engage in the driver (40) so as to guide said driver radially.

3. An appliance for preparing food according to claim 2, **characterized in that** said driver (40) has a bottom portion provided with a convergent cavity (403) provided with a central orifice (402) into which the end of the guide spindle (10) is engaged.

4. An appliance for preparing food according to claim 2 or claim 3, **characterized in that** the hub (20) has a top edge (200) for engaging edge-to-edge with a bottom edge (400) of the driver (40).

5. An appliance for preparing food according to claim 4, **characterized in that** each of the edges (200, 400) of the hub (20) and of the driver (40) that come into register with each other has two steps (201, 401) disposed symmetrically relative to each other, each of which steps (201, 401) has a side edge extending substantially axially and a top edge extending helically so as to extend to the base of the side edge of the other step.

6. An appliance for preparing food according to any one of claims 1 to 5, **characterized in that** said drive shaft (4) has a top end driven in rotation by a motor.

7. An appliance for preparing food according to claim 6, **characterized in that** the top end of the drive shaft (4) is designed to be coupled to a removable motor housing.

## Patentansprüche

1. Elektrohaushaltsgerät zur Nahrungszubereitung, mit einem Arbeitsbehälter (1), dessen Boden mit einer Führungsachse (10) versehen ist, auf der ein Drehwerkzeug (2), das zum Behandeln der Lebensmittel bestimmt ist, angreifen kann, wobei der Arbeitsbehälter (1) durch einen Deckel (3) geschlossen ist, der eine Antriebswelle (4) abstützt, welche mit einem Mitnehmer (40) versehen ist, der dazu bestimmt ist, sich mit dem Drehwerkzeug zu koppeln, **dadurch gekennzeichnet, dass** das Ankoppeln des Mitnehmers (40) an das Drehwerkzeug (2) durch Formschluss erfolgt, der die alleinige Übertragung eines Moments auf das Drehwerkzeug (2) sicherstellt, ohne ein radiales Halten des Drehwerkzeugs (2) bezüglich des Mitnehmers (40) sicherzustellen.

2. Gerät zur Nahrungszubereitung nach Anspruch 1, **dadurch gekennzeichnet, dass** das Drehwerkzeug (2) eine Nabe (20) aufweist, durch welche die Führungsachse (10) hindurchgeht, wobei das obere Ende der Führungsachse (10) in den Mitnehmer (40) eingreift, um diesen radial zu führen.

3. Gerät zur Nahrungszubereitung nach Anspruch 2, **dadurch gekennzeichnet, dass** der Mitnehmer (40) einen unteren Teil mit einem konvergierenden Hohlraum (403) aufweist, der mit einer zentralen Öffnung (402) versehen ist, in welche das Ende der Führungsachse (10) eingreift.

4. Gerät zur Nahrungszubereitung nach einem der Ansprüche 2 bis 3, **dadurch gekennzeichnet, dass** die Nabe (20) einen oberen Rand (200) aufweist, der sich an einen unteren Rand (400) des Mitnehmers (40) anlegt.

5. Gerät zur Nahrungszubereitung nach Anspruch 4, **dadurch gekennzeichnet, dass** die einander gegenüber kommenden Ränder (200, 400) der Nabe (20) bzw. des Mitnehmers (40) zwei Stufen (201, 401) aufweisen, die zueinander symmetrisch angeordnet sind, wobei diese Stufen (201, 401) einen Seitenrand, der sich im Wesentlichen axial erstreckt, und einen oberen Rand, der sich spiralförmig erstreckt, um mit der Basis des Seitenrands der anderen Stufe zusammenzulaufen, aufweisen.

6. Gerät zur Nahrungszubereitung nach einem der Ansprüche 1 bis 5, **dadurch gekennzeichnet, dass** die Antriebswelle (4) ein von einem Motor in Drehung versetztes oberes Ende aufweist.

7. Gerät zur Nahrungszubereitung nach Anspruch 6, **dadurch gekennzeichnet, dass** das obere Ende der Antriebswelle (4) dazu bestimmt ist, sich mit einem abnehmbaren Motorgehäuse zu ykoppeln.
